# EUROPÄISCHE PATENTSCHRIFT

(11) **EP 2 215 704 B1**
(45) Veröffentlichungstag und Bekanntmachung des Hinweises auf die Patenterteilung: **08.02.2012**
(21) Anmeldenummer: 08856856.3
(22) Anmeldetag: 05.12.2008
(51) Int. Cl.: H02K 7/18

(54) **ELEKTROHYDRAULISCHES AGGREGAT**
ELECTROHYDRAULIC UNIT
ENSEMBLE ÉLECTRO-HYDRAULIQUE

(30) Priorität: 06.12.2007 DE 102007058858
(43) Veröffentlichungstag der Anmeldung: 11.08.2010
(73) Patentinhaber: Hydac Electronic GmbH, 66128 Saarbrücken (DE)
(72) Erfinder: KÜHNE, Manfred, 41812 Erkelenz (DE)
(74) Vertreter: Crazzolara, Helmut
(86) Internationale Anmeldenummer: PCT/EP2008/010353
(87) Internationale Veröffentlichungsnummer: WO 2009/071320

(56) Entgegenhaltungen:
- EP-A- 0 578 390
- US-A- 4 850 812

## Beschreibung

Die Erfindung betrifft ein elektrohydraulisches Aggregat mit einer hydraulischen Pumpeneinrichtung und einer elektrischen Motoreinrichtung, die üblicherweise in jeweils einem Gehäuse ausgebildet sind, wobei die beiden Gehäuse zur Bildung des Aggregats mechanisch miteinander verbunden werden.

Derartige Aggregate werden in der Regel als Pumpen eingesetzt, wobei mechanische Energie in hydrostatische Energie umgewandelt wird.
Die mechanische Energie wird durch die elektrischen Motoreinrichtung bereitgestellt, die als Drehstrommotor ausgebildet ist und an eine elektrische Wechselspannungsversorgung anschließbar ist.

Aus der EP 1 669 599 A1 ist ein hydraulisches Kombinationsaggregat bekannt umfassend einen Tank, eine Pumpenanordnung, hydraulische Steuerelemente und einen Elektromotor für die Pumpenanordnung, wobei die Bauteile koaxial entlang einer geraden Achse angeordnet sind.

Aus der EP 0 578 390 B1 ist eine Hydrovorrichtung bekannt, die durch einen integrierten elektrischen Motor angetrieben ist. Der Rotor des Elektromotors ist koaxial zum Zylinderblock der Hydraulikpumpe gelagert. Der Stator des Elektromotors umgibt den Rotor und ist im Gehäuse montiert.

Die US 4 850 812 A zeigt ein Aggregat nach dem Oberbegriff des Patentanspruchs 1.

Der Erfindung liegt die Aufgabe zugrunde, ein elektrohydraulisches Aggregat bereitzustellen, welches vielseitig einsetzbar ist. In einer Ausführungsart soll bei kompakter Bauweise ein dauerhaft zuverlässiger Betrieb gewährleistet sein.

Diese Aufgabe ist durch das im Anspruch 1 bestimmte elektrohydraulische Aggregat gelöst. Besondere Ausführungsarten der Erfindung sind in den Unteransprüchen bestimmt.

Das elektrohydraulische Aggregat weist integral sowohl eine hydraulische Pumpen-/Motoreinrichtung als auch eine elektrische Motor-/Generatoreinrichtung auf. Die hydraulische und die elektrische Einrichtung sind dabei in einer Baueinheit mit einem gemeinsamen Gehäuse ausgeführt, insbesondere in einem gemeinsamen Gehäuse des Aggregats untergebracht. Die hydraulische Einrichtung kann dabei sowohl im Pumpenbetrieb als auch im Motorbetrieb eingesetzt werden. Im Motorbetrieb erfolgt eine Umwandlung von hydrostatischer Energie in mechanische Energie, die an einen elektromechanischen Generator gekoppelt werden kann und dadurch elektrische Energie erzeugt werden kann. Dementsprechend ist die elektrische Einrichtung sowohl als Motoreinrichtung einsetzbar, nämlich dann, wenn die hydraulische Einrichtung als Pumpe betrieben wird, oder als Generatoreinrichtung einsetzbar, nämlich dann, wenn die hydraulische Einrichtung als hydraulischer Motor betrieben wird.

Die elektrische Motor-/Generatoreinrichtung weist einen mit der hydraulischen Pumpen-/Motoreinrichtung bewegungsgekoppelten Rotor auf. Vorzugsweise sind die elektrische und die hydraulische Einrichtung in Bezug auf eine Längsachse des Aggregats radial hintereinander angeordnet. In einer Ausführungsart ist die hydraulische Einrichtung radial innerhalb der elektrischen Einrichtung angeordnet. Der Rotor bildet dabei die Trennstelle zwischen hydraulischer und elektrischer Einrichtung und ist Teil sowohl der hydraulischen Pumpen-/Motoreinrichtung als auch der elektrischen Motor-/Generatoreinrichtung. Der Rotor weist sowohl eine hydraulische Funktion auf, nämlich als Körper für die Aufnahme der Zylinderbohrung eines Verdrängerkolbens, als auch eine elektrische Funktion, nämlich als Träger für Permanentmagnete. Der Rotor kann mehrere Zylinderbohrungen aufweisen, vorzugsweise eine ungerade Anzahl von Zylinderbohrungen, die mindestens teilweise gleichwinklig voneinander beabstandet vorzugsweise auf einer Kreislinie um eine Rotationsachse herum angeordnet sein können.

Die elektrische Motor/Generatoreinrichtung, ist an eine elektrische Gleichspannungsleitung anschließbar, beispielsweise an ein Gleichspannungs-Versorgungsnetz eines Fahrzeuges, wie etwa eines Straßenfahrzeuges, eines Flugzeuges oder eines Schiffes. Die elektrischen Ströme in den Statorwicklungen sind im Motorbetrieb der elektrischen Einrichtung elektronisch kommutierbar. Hierzu können die Statorwicklungen entweder mit wechselnder Polarität mit der elektrischen Gleichspannungsleitung verbunden werden, oder aus der elektrischen Gleichspannungsleitung wird ein elektrisches Wechselfeld erzeugt, das in geeigneter zeitlicher Abfolge auf die Statorwicklungen aufgeschaltet wird. Auch im elektrischen Generatorbetrieb ist eine elektronische Kommutierung der in den Statorwicklungen durch die Drehung des Rotors induzierten Spannungen möglich, oder alternativ eine Gleichrichtung der induzierten Spannungen beispielsweise mit einem Brückengleichrichter.

Die elektrischen Ströme sind in den Statorwicklungen mittels einer Ansteuerschaltung elektronisch kommutierbar, wobei die Ansteuerschaltung Teil des Aggregats und insbesondere der elektrischen Motor-/Generatoreinrichtung ist. Die Ansteuerschaltung kann in dem elektrohydraulischen Aggregat oder sogar in der elektrischen Motor-/Generatoreinrichtung integriert sein oder in einer separaten Baueinheit unmittelbar an dem elektrohydraulischen Aggregat angeordnet sein. In einer Ausführungsart ist die elektrische Motor-/Generatoreinrichtung dreiphasig. Die Ansteuerung kann in der Art eines Schrittmotors erfolgen, bei dem die Phasen blind geschaltet werden, oder mit einem Sensor zur Detektion der Stellung des Rotors. In einer Ausführungsart kann die Ansteuerung auch sensorlos erfolgen.
Die Ansteuerschaltung kann auch von dem elektrohydraulischen Aggregat beabstandet, aber mit diesem über Anschlussleitungen elektrisch verbunden sein. Die elektrische Motor-/Generatoreinrichtung ist eine bürstenlose Gleichstrommaschine.

Durch die elektronische Kommutierung ist es mögl ich, die Drehzahl und/oder die Leistung des elektrohydraulischen Aggregats, insbesondere der elektrischen Motor-/Generatoreinrichtung, gegebenenfalls auch stufenlos einzustellen. Dadurch ergibt sich auch bei sehr kompakten elektrohydraulischen Aggregaten mit in Bezug auf die Baugröße hoher hydraulischer und/oder elektrischer Leistung unter anderem ein geringes Betriebsgeräusch und auch ein vergleichsweise geringes Gewicht.

Besonders vorteilhaft ist, dass ein erfindungsgemäßes Aggregat aufgrund der möglichen Gleichspannungsversorgung auch in Bereichen eingesetzt werden kann, in denen bisher der Einsatz von elektrohydraulischen Aggregaten aufgrund der erforderlichen Wechselspannungsversorgung nicht oder jedenfalls nicht ohne größeren Aufwand möglich ist. Typische neue Anwendungsfelder sind insbesondere mobile Einsatzbereiche wie beispielsweise in der Fahrzeug- oder Flugzeugtechnik oder bei Schiffen, wobei durch die kompakte Bauform und die elektronische Kommutierung mit einfachen Mitteln auch ein Einsatz im Unterölbereich möglich ist. Außerdem kann das erfindungsgemäße Aggregat nicht nur auf einfache Weise aus einem Batterienetz gespeist werden, sondern es kann auch eine Rückgewinnung hydraulischer Energie erfolgen, indem die hydraulische Einrichtung als Motoreinrichtung und dementsprechend die elektrische Einrichtung als Generatoreinrichtung betreibbar ist.

In einer Ausführungsart tritt aus dem Aggregat kein drehendes Teil nach außen, insbesondere keine Antriebswelle. Es sind nur statische Dichtungen erforderlich, um das Aggregat abzudichten, insbesondere keine Dichtungen zu rotierenden Teilen.

Ein weiterer Vorteil besteht in der weitgehenden Freiheit von axialen Kräften, insbesondere von axialen Kräften auf das Steuerelement und die Kolbentrommel des Aggregats, im Betrieb aufgrund des Gegenkolbenprinzips und/oder der radialen Anströmung der Verdrängungsräume. Hinzu kommt, dass die magnetischen Kräfte der Permanentmagnete zu einer Selbstzentrierung der Komponenten in axialer und/oder radialer Richtung bezogen auf die Längsachse führt, insbesondere der Zylindertrommel.

In einer Ausführungsart sind die elektrischen Ströme in den Statorwicklungen sensorlos kommutierbar. Hierzu kann beispielsweise die Änderung der Stranginduktivität durch insbesondere vom Rotor bewirkte Flussänderungen im Eisenkern ausgewertet werden. Zu diesem Zweck kann das Sternpunktpotential in bestimmten Schaltzuständen der Stränge gemessen werden, und der Motor kann als induktive Messbrücke zur Bestimmung relativer Stranginduktivitäten eingesetzt werden.

An dem Rotor der elektrischen Motor-/Generatoreinrichtung sind Permanentmagnete angeordnet, die mit den elektrischen Strömen in den Statorwicklungen in Wirkverbindung stehen. Die Anordnung der Permanentmagnete erfolgt vorzugsweise radial außen an dem Rotor, insbesondere unmittelbar gegenüberliegend dem den magnetischen Fluss leitenden Kern des Stators. In einer Ausführungsart sind die Magnete so angeordnet, dass die Richtung vom Nordpol zum Südpol des Magneten radial in Bezug auf die Drehachse ausgerichtet ist. Die Magnete sind so an dem Rotor festgelegt, dass entweder alle Nordpole oder alle Südpole radial innen liegen. Um dies bei der Montage einfach zu gewährleisten, weisen die Magnete jeweils eine Markierung des Nordpols und/oder des Südpols auf.

Die hydraulische Pumpen-/Motoreinrichtung ist eine Kolbenmaschine, bei welcher ein Verdrängerkolben in einer Zylinderbohrung verschiebbar ist. Durch das Verschieben des Verdrängerkolbens in der Zylinderbohrung wird der Verdrängungsraum abwechselnd vergrößert und verkleinert, was dem Arbeitshub der hydraulischen Pumpen-/Motoreinrichtung entspricht.

Die Zylinderbohrung ist in dem Rotor der elektrischen Motor-/Generatoreinrichtung angeordnet, an dem auch die Permanentmagnete festgelegt sind. Vorzugsweise sind mehrere, insbesondere auf einer Kreisumfangslinie um die Längsachse des Aggregats herum hintereinander angeordnete Zylinderbohrungen vorgesehen:

In einer Ausführungsart sind die Statorwicklungen in Bezug auf eine Längsachse des Aggregats im Bereich des Verdrängerkolbens angeordnet. Insbesondere ist der Verdrängungsraum von den Statorwicklungen überdeckt. Alternativ oder ergänzend sind auch die Permanentmagneten im Bereich des Verdrängungsraums angeordnet. Dadurch ist eine sehr gleichmäßige Krafteinleitung in den Rotor und damit ein sehr ruhiger und materialschonender Betrieb des Aggregates gewährleistet.

In einer Ausführungsart ist der Rotor der elektrischen Motor-/Generatoreinrichtung auf einem vorzugsweise zentrisch innerhalb des Gehäuses des Aggregates angeordneten Steuerzapfen gelagert. Der Steuerzapfen kann auch die hydraulischen Anschlüsse für die Nieder-und/oder die Hochdruckseite aufweisen, vorzugsweise auf einander gegenüberliegenden Stirnseiten des Steuerzapfens.

In einer Ausführungsart weist die elektrische Motor-/Generatoreinrichtung elektrische Anschlussleitungen oder Anschlüsse auf, die an einem stirnseitigen Ende eines Gehäuses des Aggregates angeordnet sind. Das Gehäuse des Aggregates kann im Wesentlichen zylindrisch sein, insbesondere kreiszylindrisch. Die elektrischen Anschlüsse der Statorwicklungen und/oder Anschlussleitungen von gegebenenfalls vorgesehenen Sensoren, beispielsweise Sensoren für die Erfassung von Betriebsparametern des Aggregates wie etwa der Temperatur, können an einer gemeinsamen Stirnseite des Aggregates vorgesehen sein. Dadurch ist die Montage und gegebenenfalls auch die Wartung derartiger Aggregate vereinfacht.

Das Aggregat weist zwei einander zugeordnete und den Verdrängungsraum begrenzende Verdrängerkolben auf, die in einer gemeinsamen Zylinderbohrung gegensinnig zueinander verschiebbar sind. Die Längsachse der Zylinderbohrung kann dabei parallel und insbesondere koaxial zu der Hubachse oder einer Symmetrieachse mindestens eines, vorzugsweise beider Verdrängungskolben sein. Die Verdrängerkolben können sich jeweils gleichzeitig aufeinander zu bewegen und voneinander weg bewegen, und dadurch mit verhältnismäßig kleinen Hüben eine große Volumenänderung bewirken. Das Aggregat realisiert damit ein neues Funktionsprinzip unter Verwendung von zwei Gegenkolben in einer gemeinsamen Zylinderbohrung.

In einer Ausführungsart kann die Zylinderbohrung in einer Zylindertrommel angeordnet sein, die auf einer Umfangslinie um eine vorzugsweise zentrische Längsachse eine Vielzahl von Zylinderbohrungen aufweist, in denen jeweils zwei Verdrängerkolben gegensinnig zueinander verschiebbar sind. In einer Ausführungsart ist durch die gegensinnige Verschiebbarkeit der beiden Verdrängerkolben bei gegebenen Zylindervolumen ein im Vergleich zu bekannten Aggregaten geringerer Kolbenhub erforderlich, so dass die Kolbengeschwindigkeit entsprechend herabgesetzt ist. In einer Ausführungsart kann auf Laufbuchsen für die Verdrängerkolben verzichtet werden.

In einer Ausführungsart ist eine Einlassöffnung und/oder eine Auslassöffnung der Zylinderbohrung zwischen den beiden Verdrängerkolben angeordnet, vorzugsweise mittig zwischen den beiden Verdrängerkolben. In einer Ausführungsart verläuft die Einlassöffnung und/oder die Auslassöffnung der Zylinderbohrung mindestens abschnittsweise, insbesondere an seinem an die Zylinderbohrung anschließenden Abschnitt, schräg zu einer Längsachse der Zylinderbohrung. Vorzugsweise schließt die Einlassöffnung und/oder die Auslassöffnung mit der Längsachse der Zylinderbohrung einen Winkel zwischen 10 und 90° ein. Insbesondere in dem Fall, dass die Einlassöffnung und/oder die Auslassöffnung nach radial innen in Bezug auf eine Längsachse des Aggregats verläuft, beträgt der Winkel vorzugsweise zwischen 45 und 75°. Die Erstreckung der Öffnungen kann mindestens abschnittsweise geradlinig oder gekrümmt sein.

In einer Ausführungsart werden die Verdrängungsräume radial angeströmt, jedenfalls ist die Strömungskomponente in Radialrichtung größer als in Axialrichtung. In einer Ausführungsart sind die Querschnittsflächen der Einlass- und Auslasskanäle vom Medienanschluss zum Verdrängungsraum hin, einschließlich der Einlass- und Auslassöffnungen zum Verdrängungsraum, konstant oder werden sogar größer, um eine Druckreduktion und eine dadurch verursachte Bildung von Kavitäten in dem beförderten Medium zu verhindern, und dadurch die Effizienz der Axialkolbenmaschine zu erhöhen.

In einer Ausführungsart ist die Einlassöffnung und/oder die Auslassöffnung an einer Mantelfläche der Zylinderbohrung angeordnet. Die axialen stirnseitigen Endflächen des Verdrängungsraumes sind durch die Verdrängerkolben gebildet. Die Einlassöffnung und/oder die Auslassöffnung erstreckt sich mindestens abschnittsweise, insbesondere an ihrem an die Zylinderbohrung anschließenden Abschnitt, in Bezug auf eine Längsachse der Zylinderbohrung radial nach innen oder radial nach außen, insbesondere schräg, d.h. mit einem Winkel zwischen 0 und 90° zur Längsachse, oder quer, d.h. mit einem Winkel von 90° zur Längsachse, radial nach innen oder schräg oder quer radial nach außen. Dort kann als Einlass- oder Auslasskanal eine Sammelleitung angeordnet sein, welche die Einlassöffnungen und/oder Auslassöffnungen an den Anschluss einer Niederdruckseite oder an den Anschluss einer Hochdruckseite des Aggregats führt. In einer Ausführungsart kann der Anschluss für die Niederdruckseite und/oder der Anschluss für die Hochdruckseite an den axialen Stirnflächen eines Gehäuses des Aggregats angeordnet sein, insbesondere zentrisch in Bezug auf die Längsachse.

In einer Ausführungsart ist zwischen den beiden einander zugeordneten Verdrängerkolben ein Kraftspeicher angeordnet, der die beiden Verdrängerkolben auseinanderdrückt und in Anlage an der jeweiligen Schrägscheibe hält. Der Kraftspeicher ist in dem Verdrängungsraum angeordnet und beispielsweise durch eine Schraubenfeder gebildet. Durch den Kraftspeicher ist insbesondere sowohl beim Starten des Aggregats eine definierte Position der Verdrängerkolben gegeben, und damit ein sicherer Anlauf des Aggregats gewährleistet, als auch beim Betrieb des Aggregats auf der Einlassseite die Anlage der Verdrängerkolben an der ihnen zugeordneten Schrägscheibe gewährleistet.

In einer Ausführungsart weist das Aggregat eine Schrägscheibe auf, durch deren Scheibenfläche mit einer Längsachse des Aggregats ein Winkel von weniger als 90° einschließbar ist. Der Winkel zwischen der Schrägscheibe und der Längsachse kann einstellbar sein, beispielsweise um dadurch das geometrische Verdrängungsvolumen im Pumpenbetrieb einzustellen. Der gegebenenfalls auch einstellbare Winkel beträgt in einer Ausführungsart zwischen 75 und 90°, vorzugsweise zwischen 80 und 90° und insbesondere zwischen 85 und 90°. In einer Ausführungsart ist die Schrägscheibe drehfest in einem Gehäuse des Aggregats angeordnet.

Im Regelfall ist eine Kombination aus einem drehzahlvariablen Motor mit einer Pumpe mit konstantem geometrischen Verdrängungsvolumen zweckmäßig, oder eine Kombination eines Motors mit konstanter Drehzahl und einer Pumpe mit einstellbarem geometrischen Verdrängungsvolumen.

In einer Ausführungsart sind die Verdrängerkolben vorzugsweise mit ihrem axialen Endabschnitt an jeweils einer Schrägscheibe in Anlage gehalten und stützen sich an der Schrägscheibe ab. Die Anlagekraft wird durch den Systemdruck bereitgestellt und kann außerdem, jedenfalls unterstützend, durch einen zwischen den beiden Verdrängerkolben angeordneten Kraftspeicher bereitgestellt werden. Der Verdrängerkolben kann unmittelbar in Anlage an der Schrägscheibe sein oder mittelbar unter Verwendung eines sogenannten Kolbenschuhs, in dem der Verdrängerkolben gelenkig gelagert ist. Der Kolbenschuh kann mit der Schrägscheibe verbunden sein. Der Verdrängerkolben ist vorzugsweise mit einem Abschnitt in Anlage an der Schrägscheibe, der dem den Verdrängungsraum begrenzenden Abschnitt des Verdrängerkolbens gegenüberliegt.

In einer Ausführungsart sind ein Niederdruckanschluss und ein Hochdruckanschluss auf einander gegenüberliegenden Seiten eines Gehäuses des Aggregats angeordnet. Die Anordnung kann in Bezug auf die Längsachse des Aggregats entweder auf radial gegenüberliegenden oder auf axial gegenüberliegenden Seiten sein. Das Aggregat kann eine Sammelleitung aufweisen, mit welcher die Einlassöffnungen und/oder die Auslassöffnungen mehrerer Verdrängungsräume des Aggregats miteinander und mit einem zugeordneten Niederdruckanschluss oder Hochdruckanschluss verbunden sind. Die Sammelleitung kann sich mindestens abschnittsweise parallel zu der Längsachse des Aggregats erstrecken, oder sich mindestens abschnittsweise in einer Umfangsrichtung um die Längsachse des Aggregats herum erstrecken.

Weitere Vorteile, Merkmale und Einzelheiten der Erfindung ergeben sich aus den Unteransprüchen und der nachfolgenden Beschreibung, in der unter Bezugnahme auf die Zeichnungen ein Ausführungsbeispiel im Einzelnen beschrieben ist.
- Fig. 1: zeigt einen Längsschnitt durch ein Ausführungsbeispiel eines erfindungsgemäßen elektrohydraulischen Aggregats,
- Fig. 2: zeigt eine Explosionsdarstellung des Ausführungsbeispiels der Fig. 1,
- Fig. 3: zeigt eine stirnseitige Ansicht auf das Ausführungsbeispiel der Fig. 1,
- Fig. 4: zeigt eine Seitenansicht des Ausführungsbeispiels der Fig. 1, und
- Fig. 5: zeigt die Ansicht auf die zweite Stirnseite des Ausführungsbeispiels der Fig. 1.

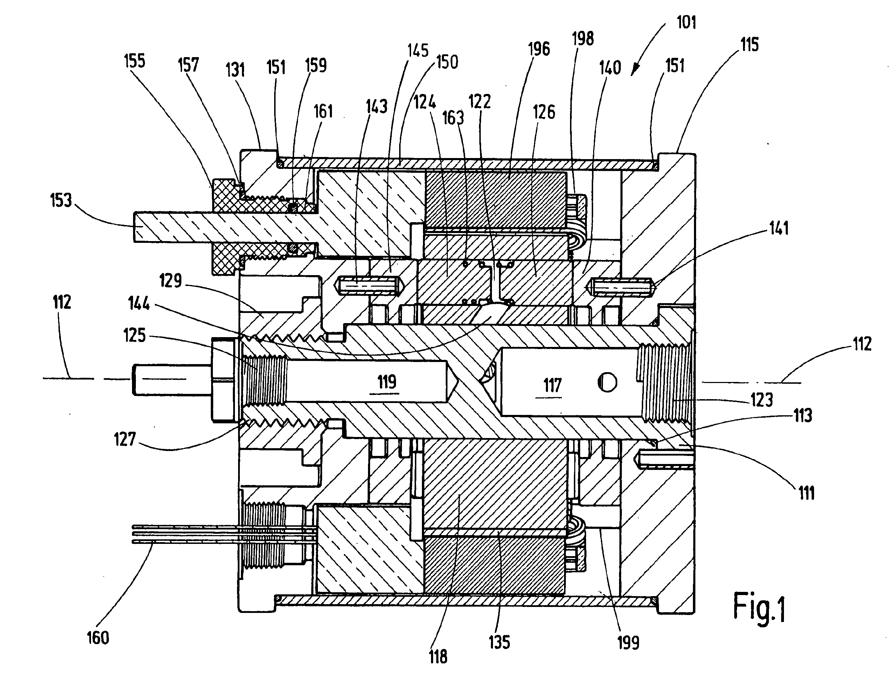

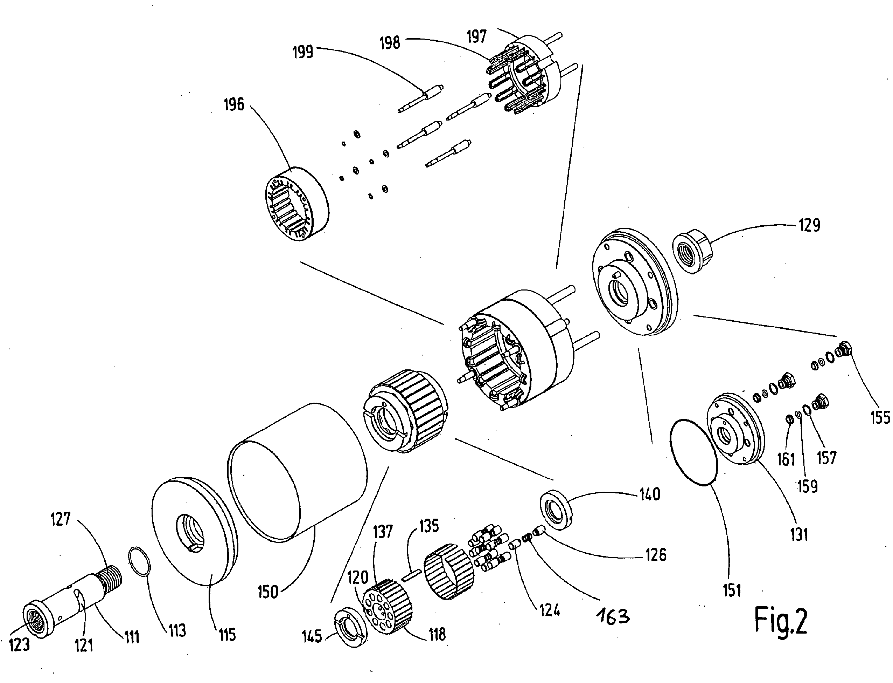

Die Fig. 1 zeigt einen Längsschnitt durch ein Ausführungsbeispiel eines erfindungsgemäßen elektrohydraulischen Aggregats 101, und die Fig. 2 zeigt eine Explosionsdarstellung des Ausführungsbeispiels der Fig. 1. Vorzugsweise im Wesentlichen zentrisch in einem Gehäuse ist entlang einer Längsachse 112 ein Steuerelement 111 angeordnet, welches auch als Steuerzapfen bezeichnet wird. In einer Zylindertrommel 118, die konzentrisch zu dem Steuerelement 111 angeordnet ist und um dieses drehbar innerhalb des Gehäuses gelagert ist, sind mehrere, entlang einer Kreisumfangslinie um die Längsachse 112 herum angeordnete und parallel zur Längsachse 112 verlaufende Zylinderbohrungen 120 (Fig. 2) angeordnet.

In jeder Zylinderbohrung 120 sind zwei einander zugeordnete und den Verdrängungsraum 122 begrenzende Verdrängerkolben 124, 126 angeordnet, die in der gemeinsamen Zylinderbohrung 120 gegensinnig zueinander verschiebbar sind. Auf ihren einander zugeordneten Stirnflächen sind die Verdrängerkolben 124, 126 vorzugsweise im Wesentlichen plan.

Mit ihrem gegenüberliegenden Endabschnitt sind die Verdrängerkolben 124, 126 in Anlage an einer Schrägscheibe 140, so dass sich bei einer Rotation der Zylindertrommel 118 und der mitrotierenden Verdrängerkolben 124, 126 infolge der Schrägstellung der Schrägscheibe 140 gegenüber der Längsachse 112 eine Hubbewegung der Verdrängerkolben 124, 126 in der Zylinderbohrung 120 ergibt. Der von der Schrägscheibe 140 und der Längsachse 112 eingeschlossene Winkel beträgt in einem Ausführungsbeispiel zwischen 75 und 90°, vorzugsweise zwischen 80 und 90° und insbesondere zwischen 85 und 90°. Bei einem Winkel von 90° erfolgt bei einer Rotation der Zylindertrommel 118 keine Hubbewegung der Verdrängungskolben 124, 126.

Für jede Zylinderbohrung 120 ist eine Einlassöffnung oder eine Auslassöffnung 144 vorgesehen, die sich schräg in Bezug auf die Längsachse 112 erstrecken. Die Einlassöffnungen und Auslassöffnungen 144 befinden sich auch mittig in Bezug auf die beiden Verdrängerkolben 124, 126 und bestimmen an ihrer Verbindungsstelle mit der Zylinderbohrung 120 eine rechtwinklig zur Längsachse 112 verlaufende Trennebene, die auch eine Symmetrieebene hinsichtlich der Anordnung der Verdrängerkolben 124, 126 zu beiden Seiten dieser Trennebene bilden kann.

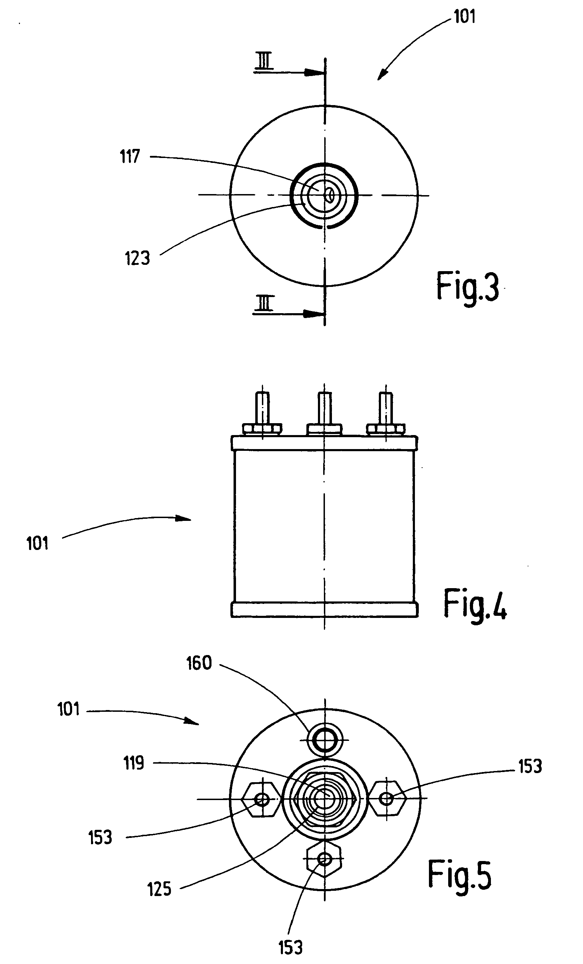

Die Fig. 3 zeigt eine stirnseitige Ansicht auf das Ausführungsbeispiel der Fig. 1 mit einer ersten Sacklochbohrung 117, die den Einlass des elektrohydraulischen Aggregats 101 bildet. Die Fig. 4 zeigt eine Seitenansicht und die Fig. 5 zeigt die Ansicht auf die zweite Stirnseite mit einer zweiten Sacklochbohrung 119, die den Auslass des elektrohydraulischen Aggregats 101 bildet.

Eine elektrische Motor-/Generatoreinheit ist in das elektrohydraulische Aggregat 101 integriert. Die Motor-/Generatoreinheit umfasst einen Rotor, der durch die Zylindertrommel 118 gebildet ist, und einen Stator, der durch einen den magnetischen Fluss leitenden Kern 196 und eine zugehörige Spulenwicklung 198 gebildet ist. Dementsprechend tritt bei dem dargestellten Ausführungsbeispiel aus dem elektrohydraulischen Aggregat 101 auch keine Antriebswelle aus dem Gehäuse aus, was grundsätzlich aber möglich wäre, beispielsweise für den Anschluss weiterer Komponenten.

Die in der Zylinderbohrung 120 angeordneten und einander zugeordneten Verdrängerkolben 124, 126 werden durch einen zwischen ihnen in dem Verdrängungsraum 122 angeordneten Kraftspeicher 163, im Ausführungsbeispiel eine Schraubenfeder, in Anlage an den ihnen jeweils zugeordneten Schrägscheiben 140, 145 gehalten, die fest in dem Gehäuse des elektrohydraulischen Aggregats 101 angeordnet sind. In dem Ausführungsbeispiel sind die Schrägscheiben 140, 145 durch Anlage an dem Steuerelement 111 zentriert und mittels jeweils eines Spannstiftes 141, 143 in einem Gehäuseteil festgelegt und gegen Drehen gesichert.

Zentrisch in dem Gehäuse und koaxial zur Längsachse 112 ist das im Ausführungsbeispiel im Wesentlichen mindestens abschnittsweise zylindrische Steuerelement 111 angeordnet, das mittels eines Dichtelements 113 fluiddicht mit einem axial stirnseitig angeordneten Deckel 115 verbunden ist und ein Lager für die Zylindertrommel 118 bildet. Das Steuerelement 111 weist zwei von jeweils einem stirnseitigen Ende her ausgehende Sacklochbohrungen 117, 119 auf, wobei die erste Sacklochbohrung 117 einen größeren Durchmesser aufweist als die zweite Sacklochbohrung 119. Die Sacklochbohrungen 117, 119 verbinden über Einlassöffnungen bzw. Auslassöffnungen 144 die Verdrängungsräume 122 mit Anschlüssen für die Niederdruckseite bzw. Hochdruckseite des elektrohydraulischen Aggregats 101. Die Einlassöffnungen und Auslassöffnungen 144 verlaufen dabei schräg zu der Längsachse 112 und schließen mit dieser vorzugsweise einen Winkel zwischen 45 und 75° ein. Die Sacklochbohrungen 117, 119 sind über Durchtrittsöffnungen 121 (Fig. 2) mit der Mantelfläche des Steuerelements 111 verbunden, wobei die Durchtrittsöffnungen 121 sich annähernd halbkreisförmig über die Mantelfläche des Steuerelements 111 erstrecken können und bei einer Rotation der Zylindertrommel 118 mit den Einlassöffnungen bzw. den Auslassöffnungen 144 in Verbindung treten können. Gleichzeitig bildet das Steuerelement 111 mit seiner kreiszylindrischen Mantelfläche eine Lagerstelle für die rotierende Zylindertrommel 118.

Das Steuerelement 111 weist an dem stirnseitigen Eingang der ersten Sacklochbohrung 117 ein Innengewinde 123 auf, das den Niederdruckanschluss oder Einlass für das elektrohydraulische Aggregat 101 bildet. An dem axial gegenüberliegenden Ende weist das Steuerelement 111 an dem stirnseitigen Eingang der zweiten Sacklochbohrung 119 ein weiteres Innengewinde 125 auf für den Anschluss der Hochdruckseite des elektrohydraul ischen Aggregats 101. Außerdem weist das Steuerelement 111 im Bereich der zweiten Sacklochbohrung 119 endseitig ein Außengewinde 127 auf für das Aufschrauben einer dichtenden Mutter 129, mittels der das Steuerelement 111 dicht mit einem weiteren Deckel 131 des Gehäuses verbunden ist.

Auf die Mantelfläche der Zylindertrommel 118 sind kreisumfänglich verteilt Permanentmagnete 135 aufgebracht, die vorzugsweise in entsprechende axial verlaufende Nuten 137 auf der Mantelfläche der Zylindertrommel 118 eingesetzt sind und dort klemmend und/oder mittels eines Verbindungsmittels festgelegt sein können, insbesondere eingeklebt sein können. Die so mit Permanentmagneten 135 bestückte Zylindertrommel 118 bildet den Rotor für die Motor-/Generatoreinheit.

Die Spulenwicklungen 198 und der magnetisch leitende Kern 196 sind an einem Statorkörper 197 angeordnet, der mittels Verbindungselementen 199, beispielsweise Fügestiften, an dem Deckel 115 und/oder dem weiteren Deckel 131 festgelegt ist. Radial außenseitig schließt ein rohrförmiges Gehäuseteil 150 das elektrohydraulische Aggregat 101 ab. Das rohrförmige Gehäuseteil 150 ist zwischen dem Deckel 115 und dem weiteren Deckel 131 angeordnet und mittels Dichtelementen 151, im Ausführungsbeispiels mittels Dichtringen, mit dem Deckel 115 und dem weiteren Deckel 131 dicht verbunden.

Wie sich auch aus der stirnseitigen Ansicht der Fig. 5 ergibt, ist auf der Auslassseite des elektrohydraulischen Aggregats 101 neben den elektrischen Anschlüssen 153 der Statorwicklungen 198, die über Durchführungen 155, zugehörige Isolationselemente 161 und Dichtelemente 157, 159 mit dem weiteren Deckel 131 verbunden sind, auch ein Anschluss 160 eines gegebenenfalls auch im Bereich der Spulenwicklung 198 angeordneten Sensors nach außen geführt. Der Sensor kann beispielsweise ein Temperatursensor sein und/oder eine Detektion der Rotorposition für eine elektronische Kommutierung der Spulenwicklungen 198 mittels einer Ansteuerschaltung ermöglichen, die ihrerseits über eine Gleichstromversorgung gespeist werden kann. Alternativ hierzu könnte die Ansteuerschaltung auch noch in das Gehäuse des elektrohydraulischen Aggregats 101 integriert sein, so dass dieses unmittelbar einen Gleichstromanschluss aufweist.

In einer Ausführungsart kann durch ein Untermaß des Verdrängerkolbens 124, 126 in Bezug auf die Zylinderbohrung 120 und/oder der Zylindertrommel 118 gegenüber dem Steuerelement 111 oder dem Steuerzapfen ein Leckagestrom bereitgestellt sein, der einen Kühlvolumenstrom für eine effiziente Kühlung der Motor-/Generatoreinheit bewirkt, wodurch sich auch bei sehr kompakter Bauform eine hohe Leistung des elektrohydraulischen Aggregats 101 erreichen lässt. Dadurch kann auf die sonst bei elektrischen Maschinen üblichen Kühlrippen verzichtet werden.

## Patentansprüche

1. Elektrohydraulisches Aggregat (101) integral aufweisend eine hydraulische Pumpen-/Motoreinrichtung und eine elektrische Motor-/Generatoreinrichtung, wobei die elektrische Motor-/Generatoreinrichtung einen mit der hydraulischen Pumpen-/Motoreinrichtung bewegungsgekoppelten Rotor aufweist, und wobei die elektrische Motor-/Generatoreinrichtung an eine elektrische Gleichspannungsleitung anschließbar ist und die elektrischen Ströme in Statorwicklungen (198) der elektrischen Motor-/Generatoreinrichtung elektronisch kommutierbar sind, und wobei die elektrischen Ströme in den Statorwicklungen (198) mittels einer mit der Gleichspannungsleitung elektrisch verbindbaren Ansteuerschaltung elektronisch kommutierbar sind, und wobei an dem Rotor der elektrischen Motor-/Generatoreinrichtung Permanentmagnete (135) angeordnet sind, die mit den elektrischen Strömen in den Statorwicklungen (198) in Wirkverbindung stehen, **dadurch gekennzeichnet, dass** zwei einander zugeordnete und einen Verdrängungsraum (122) begrenzende Verdrängerkolben (124, 126) in einer gemeinsamen und in dem Rotor der elektrischen Motor-/Generatoreinrichtung angeordneten Zylinderbohrung (120) gegensinnig zueinander verschiebbar sind, und dass die in der Zylinderbohrung (120) angeordneten und einander zugeordneten Verdrängerkolben (124, 126) durch einen zwischen ihnen in dem Verdrängungsraum (122) angeordneten Kraftspeicher (163) in Anlage an ihnen jeweils zugeordneten Schrägscheiben (140, 145) gehalten sind, die fest in dem Gehäuse des elektrohydraulischen Aggregats (101) angeordnet sind.

2. Elektrohydraulisches Aggregat (101) nach Anspruch 1, **dadurch gekennzeichnet, dass** die elektrischen Ströme in den Statorwicklungen (198) mittels der mit der Gleichspannungsleitung elektrisch verbindbaren Ansteuerschaltung sensorlos elektronisch kommutierbar sind.

3. Elektrohydraulisches Aggregat (101) nach Anspruch 1 oder 2, **dadurch gekennzeichnet, dass** durch ein Untermaß des Verdrängerkolbens (124, 126) in Bezug auf die Zylinderbohrung (120) und/oder einer Zylindertrommel (118) gegenüber einem Steuerelement (111) oder einem Steuerzapfen ein Leckagestrom bereitgestellt wird, der einen Kühlvolumenstrom für eine effiziente Kühlung des elektrohydraulischen Aggregats (101) bewirkt.

4. Elektrohydraulisches Aggregat (101) nach einem der Ansprüche 1 bis 3, **dadurch gekennzeichnet, dass** die Statorwicklungen (198) in Bezug auf eine Längsachse (112) des Aggregats (101) im Bereich des Verdrängerkolbens (124, 126) angeordnet sind.

5. Elektrohydraulisches Aggregat (101) nach Anspruch 1 oder einem der vorangehenden Ansprüche, **dadurch gekennzeichnet, dass** der Rotor der elektrischen Motor-/Generatoreinrichtung auf einem vorzugsweise zentrischen Steuerzapfen (111) des Aggregats (101) gelagert ist.

6. Elektrohydraulisches Aggregat (101) nach Anspruch 1 oder einem der vorangehenden Ansprüche, **dadurch gekennzeichnet, dass** die elektrische Motor-/Generatoreinrichtung elektrische Anschlüsse (153) aufweist, die an einem stirnseitigen Ende eines Gehäuses des Aggregats (101) angeordnet sind.

## Claims

1. An electrohydraulic unit (101) integrally comprising a hydraulic pump/motor device and an electric motor/generator device, the electric motor/generator device comprising a rotor that is coupled in terms of movement to the hydraulic pump/motor device, and the electric motor/generator device being connectable to an electric direct current line and the electric currents in stator windings (198) of the electric motor/generator device being electronically commutatable, and the electric currents in the stator windings (198) being electronically commutatable by means of a trigger circuit connectable to the direct current line, and there being arranged on the rotor of the electric motor/generator device permanent magnets (135) which are operatively connected to the electric current in the stator windings (198), **characterised in that** two displacing pistons (124, 125) assigned to one another and defining a displacement area (122) can be displaced in opposite directions in relation to one another in a common cylinder bore (120) disposed in the rotor of the electric motor/generator device, and that the displacing pistons (124, 126) disposed in the cylinder bore (120) and assigned to one another are held by an energy store (163) disposed between them in the displacement area (122) in contact with swash plates (140, 145) respectively assigned to them and which are arranged securely in the housing of the electrohydraulic unit (101).

2. The electrohydraulic unit (101) according to Claim 1, **characterised in that** the electric currents in the stator windings (198) are electronically commutatable without sensors by means of the trigger circuit electrically connectable to the direct current line.

3. The electrohydraulic unit (101) according to Claim 1 or 2, **characterised in that** by means of an undersize of the displacing piston (124, 126) in relation to the cylinder bore (120) and/or of a cylinder drum (118) in relation to a control element (111) or a control pin a leakage current is provided which brings about a cooling volume current for efficient cooling of the electrohydraulic unit (101).

4. The electrohydraulic unit (101) according to any of Claims 1 to 3, **characterised in that** the stator windings (198) are arranged in relation to a longitudinal axis (112) of the unit (10) in the region of the displacing piston (124, 126).

5. The electrohydraulic unit (101) according to Claim 1 or any of the preceding claims, **characterised in that** the rotor of the electric motor/generator device is mounted on a preferably centric control pin (111) of the unit (101).

6. The electrohydraulic unit (101) according to Claim 1 or any of the preceding claims, **characterised in that** the electric motor/generator device comprises electric connections (153) which are arranged on a face-side end of a housing of the unit (101).

## Revendications

1. Groupe (101) électro-hydraulique intégrant un dispositif électro-hydraulique pompe/moteur et un dispositif électrique moteur/génératrice, le dispositif électrique moteur/génératrice ayant un rotor couplé en mouvement avec le dispositif hydraulique pompe/moteur, et dans lequel le dispositif électrique moteur/génératrice peut être raccordé à une ligne électrique de tension continue et les courants électriques dans des enroulements (198) statoriques du dispositif électrique moteur/génératrice sont commutables électroniquement, et dans lequel les courants électriques dans les enroulements (198) statoriques sont commutables électroniquement au moyen d'un circuit de commande pouvant être relié électriquement à la ligne de tension continue, et dans lequel sur le rotor du dispositif électrique moteur/génératrice sont montés des aimants (135) permanents qui coopèrent avec les courants électriques dans les enroulements (198) statoriques, **caractérisé en ce que** deux pistons (124, 126) de refoulement, associés l'un à l'autre et délimitant un espace (122) de refoulement, peuvent coulisser en sens contraire l'un par rapport à l'autre dans un alésage (120) cylindrique, commun et disposé dans le rotor du dispositif électrique moteur/génératrice et **en ce que** les pistons (124, 126) de refoulement, disposés dans l'alésage (120) cylindrique et associés l'un à l'autre, sont maintenus en contact sur des rondelles (140, 145) obliques, qui leur sont associées respectivement, par un accumulateur (163) de force monté entre eux dans l'espace (122) de refoulement, rondelles qui sont montées fixes dans l'enveloppe du groupe (101) électro-hydraulique.

2. Groupe (101) électro-hydraulique suivant la revendication 1, **caractérisé en ce que** les courants électriques dans les enroulements (198) statoriques peuvent être commutés électriquement sans capteur au moyen du circuit de commande pouvant être relié électriquement à la ligne de tension continue.

3. Groupe (101) électro-hydraulique suivant la revendication 1 ou 2, **caractérisé en ce que** par un sous-dimensionnement du piston (124, 126) de refoulement par rapport à l'alésage (120) cylindrique et/ou d'un tambour (118) cylindrique par rapport à un élément (111) de commande ou par rapport à un tourillon de commande, il est ménagé un courant de fuite, qui provoque un courant de refroidissement en volume pour un refroidissement efficace du groupe (101) électro-hydraulique.

4. Groupe (101) électro-hydraulique suivant l'une des revendications 1 à 3, **caractérisé en ce que** les enroulements (198) statoriques sont disposés, par rapport à un axe (112) longitudinal du groupe (101), dans la partie du piston (124, 126) de refoulement.

5. Groupe (101) électro-hydraulique suivant la revendication 1 ou l'une des revendications précédentes, **caractérisé en ce que** le rotor du dispositif électrique moteur/génératrice est monté sur un tourillon (111) de commande, de préférence centré, du groupe (101).

6. Groupe (101) électro-hydraulique suivant la revendication 1 ou l'une des revendications précédentes, **caractérisé en ce que** le dispositif électrique moteur/génératrice a des bornes (153) électriques, qui sont disposées sur une extrémité du côté frontal d'une enveloppe du groupe (101).
